# EUROPÄISCHE PATENTANMELDUNG

(11) **EP 1 575 253 A1**
(43) Veröffentlichungstag der Anmeldung: **14.09.2005**
(21) Anmeldenummer: 05002271.4
(22) Anmeldetag: 03.02.2005
(51) Int. Cl.: H04M 3/42, H04M 3/54

(54) **Präsenz Service im Festnetz**

(30) Priorität: 09.03.2004 DE 102004011313
(71) Anmelder: Deutsche Telekom AG, 53113 Bonn (DE)
(72) Erfinder: Brackmann, Ludwig, Dipl.-Ing., 53225 Bonn (DE)

(57) **Zusammenfassung**

System umfassend ein Kommunikationsnetz, insbesondere ein Telefon-Festnetz, und eine Vielzahl von über das Netz verbundener stationärer Anschlüsse, wobei den Anschlüssen Endgeräte zugeordnet sind, die Nutzern die Möglichkeit zur Kommunikation geben, wobei ein Dienst vorhanden ist, der von einem an das Netz angeschlossenen Computer realisiert ist, wobei dieser Dienst registriert, sobald ein individualisierbarer Nutzer unmittelbar über ein Endgerät erreichbar ist, und wobei der Dienst die Erreichbarkeit aufgrund einer Handlung des Nutzers oder automatisch registriert.

## Beschreibung

Die vorliegende Erfindung betrifft ein System umfassend ein Kommunikationsnetz, insbesondere ein Telephon-Festnetz, und eine Vielzahl vermittels des Netzes verbundener stationärer Anschlüsse, wobei den Anschlüssen Endgeräte zugeordnet sind, die Nutzern die Möglichkeit zur Kommunikation geben, wobei die Kommunikation insbesondere persönliche Gespräche aber auch den Austausch von Daten umfasst.

Die Erfindung bezieht sich somit auf ein "Festnetz", das im Gegensatz zu den bekannten Mobilfunknetzen lokal feste Anschlüsse aufweist. Wenn ein Nutzer über eines solches Festnetzes einen anderen Nutzer (Adressaten) anruft, so wählt er bekanntermaßen eine Telephonnummer, die dem Ort zugeordnet ist, an dem er den Adressaten vermutet. Meist haben die Nutzer mehrere Telephonnummern, die entsprechend mehreren Anschlüssen zugeordnet sind, über die sie insbesondere privat oder geschäftlich zu erreichen sind. Dabei bieten besondere Dienste die Möglichkeit, die.Rufnummer eines Anschlusses zu einem anderen Anschluss umzuleiten. Bei einer derartigen Rufumleitung werden dann beispielsweise auch die an die private Nummer gerichteten Anrufe an den geschäftlichen Anschluss weitergeschaltet.

Dabei ist es die generelle Besonderheit des Telephonierens über ein Festnetz, dass ein Anrufer, der die einem Adressaten zugeordnete Nummer gewählt hat, nur selten davon ausgeht, dass er diesen unmittelbar und persönlich erreicht. Ruft er bei-ihm zuhause an, so muss er damit rechnen, dass ein Familienmitglied abhebt. Anders als ein mobiler Handy Anschluss ist der Festnetz-Anschluss somit weniger personalisiert. Da wegen der befürchteten Kostensteigerung und auch wegen des Umstandes der manuellen Programmierung nur begrenzt von der Rufumleitung Gebrauch gemacht wird und da eine Rufumleitung auch nur dann sinnvoll ist, solange nicht andere Familienmitglieder über den privaten Anschluss erreichbar bleiben müssen, kann mit Festnetz-Anschlüssen im weitaus geringeren Maße als es beim Mobilfunk der Fall ist mit der ständigen Erreichbarkeit des gewünschten Teilnehmers gerechnet werden. Im Mobilfunknetz ermöglichen die personalisierten Endgeräte die Präsenz und den Status der Kommunikation des Nutzers im Netz zu erkennen. Diesen Vorteil des "instant messaging" bietet das Festnetz nicht.

Aufgabe der Erfindung ist es nunmehr, ein System und ein Verfahren zu schaffen, das sich mit einfachen technischen Mitteln kostengünstig umsetzen lässt und das die Möglichkeit des "instant messaging" auch im Festnetz bietet.

Diese Aufgabe wird durch ein System mit den kennzeichnenden Merkmalen des Anspruch 1 gelöst. Vorteilhafte Ausgestaltungen des Systems sind in den Unteransprüchen genannt.

Der wesentliche Gesichtspunkt der Erfindung liegt letztendlich in einem Dienst, der die Erreichbarkeit eines individuellen Nutzer registriert und diese Information anderen Nutzern zur Verfügung stellt. Je nach Art der Ausbildung weiß dieser Dienst ob und/oder über welchen Festnetzanschluss ein Nutzer zu erreichen ist. Mit dem Wissen um die Erreichbarkeit lassen sich verschiedene Serviceleistungen realisieren. Dabei wird dieser Dienst, erfindungsgemäß von einem ebenfalls an das Netz angeschlossenen Computer (Server) realisiert. Über den Dienst wird registriert, sobald ein individualisierbarer Nutzer unmittelbar über ein Endgerät erreichbar ist. Dabei kann diese Registrierung automatisch geschehen oder durch einen manuell einfach einzugebenden Befehl initiiert werden.

In einer besonderen Ausführungsform der Erfindung wird eine Art automatische Rufumleitung realisiert, die dem Nutzer von einem Festnetzanschluss zum anderen Festnetzanschluss folgt. Zwar wäre es möglich, dass der Nutzer sich durch Eingabe eines einfachen Befehles oder durch einen mitgeführten Schlüssel, beispielsweise mittels eines Transponders, jeweils im Einzugsbereich einer Telephonanlage anmeldet, doch lässt sich die Erfindung besonders vorteilhaft realisieren, wenn das Endgerät des Nutzers eine Station und ein portables Kommunikationsmittel, insbesondere ein Mobiltelefon ("Home-Handy"), umfasst, wobei dieses portable Kommunikationsmittel innerhalb eines Sendebereiches mit der Station in Funkverbindung steht. Dieses Home-Handy, das der Nutzer mitführt, meldet sich automatisch bei der nächsten Festnetzstation an und teilt dem Dienst mit, dass der Nutzer nun über diese Rufnummer zu erreichen ist. Der Dienst kann dann diese Information den anderen Nutzern zugänglich machen. Dabei ist es vorteilhaft, wenn der Dienst automatisch eine Rufumleitung zu dem anderen Anschluss aktiviert. Damit es zu einer solchen Anmeldung des Home-Handy bei der Station kommt, findet ein Datenaustausch zwischen den Geräten statt, der von einem der Geräte initiiert wird.

Um eine Individualisierung des dem Nutzer zugeordneten Home-Handys auch bei einer fremden Station zu erreichen, ist es vorteilhaft, wenn der Anschlusskennung, insbesondere der Telephonnummer, eine Gerätekennung zugeordnet wird. Diese kann dem Dienst im einer Headerdatei übertragen werden. Die technische Umsetzung der Individualisierung kann dann ähnlich erfolgen, wie es von Telephonanlagen mit mehreren Durchwahlnummern bekannt ist. Das neu zu einem Anschluss hinzukommende Home-Handy erhält eine individuelle Gerätedurchwahl, die automatisch an die Telephonnummer, zu der umgeleitet wurde, angehängt wird. Der Anrufer bekommt dann nicht irgendeinen Unbekannten, sondern den gewünschten Teilnehmer über dessen mitgeführtes Home-Handy an den Apparat.

In einer vorteilhaften Ausführungsform erstellt der Dienst eine Datei der zu einem Zeitpunkt als aktuell erreichbar registrierten Nutzer und stellt Informationen aus dieser Datei anderen Nutzern zur Einsicht zur Verfügung. Mit diesen Informationen kann vorteilhafterweise eine sogenannte "Buddy"-Liste erstellt werden, wie sie auch von Chat-Räumen aus dem Internet bekannt ist. In dieser Liste werden alle Nutzer aufgeführt, die momentan "online" und damit unmittelbar erreichbar sind.

Dabei interessiert die Nutzer sicherlich nicht der gesamte Inhalt der vom Dienst gespeicherten Liste, sondern lediglich die Information zu den ihm bekannten Nutzern. Um für einen Nutzer diese Vorselektion zu treffen, ist es vorteilhaft, das im Endgerät dieses Nutzers hinterlegte Telephonverzeichnis heranzuziehen, das die wichtigsten Gesprächspartner enthält. Dieses Namensverzeichnis kann der Dienst um die Information der jeweiligen aktuellen Erreichbarkeit ergänzen. So könnte er beispielsweise hinter den im Telephonbuch gespeicherten Namen eine optische Anzeige aktivieren, sobald dieser Teilnehmer erreichbar ist.

Der Vorteil einer solchen "Buddy"-Liste liegt zunächst in der bekanntermaßen hohen Beliebtheit. Durch die daraus ersichtliche Information der vorhandenen Rufbereitschaft wird zudem in gewisser Weise eine Art Community der momentan telefonbereiten Nutzer geschaffen. Der Eintrag in der "Buddy"-Liste signalisiert, dass ein Nutzer sich über einen Anruf freuen würde. Damit wird bei andern Nutzern die Bereitschaft zu einem Telephonat erhöht. Für den Netzbetreiber hat das den Vorteil, dass die "Buddy"-Liste der Telefonfaulheit entgegenwirkt und damit die Netzauslastung gesteigert werden kann. Insgesamt macht die Erfindung das Telephonieren attraktiver. In einer besonderen Variante der Liste wird darin auch registriert, wenn ein Anschluss zwar bereit aber dennoch gerade belegt ist. Der potentielle Anrufer sieht somit gleich, dass sein Anruf gerade nicht erfolgreich durchgestellt werden kann.

Da mit der Erstellung der frei zugänglichen "Buddy"-Liste eine Menge an persönlicher Information veröffentlicht wird, ist es wegen der Datensicherheit vorteilhaft, wenn der Nutzer seiner Eintragung durch ein manuelles Anmelden aktiv und bewusst zustimmen kann. Zudem ist es vorteilhaft, wenn das Anmelden mit der Eingabe einen nur dem Nutzer bekannten Code einhergeht. Über einen solchen Code kann auch ein Anschluss noch weiter individualisiert werden. So können in einer Familie die Eltern einen anderen Code als jedes der Kinder haben. Damit weiß der Anrufer, wer aus der Familie gerade erreichbar ist. Der jeweilige Code kann in Verbindung mit dem Eintrag in der Liste gespeichert werden.

Neben der Liste im Endgerät können über den Dienst auch "Buddy"-Listen bezüglich der Anwesenheit und der momentanen Telephonbereitschaft aktualisiert werden, die in einem im Home LAN vorhandenen PC-Messaging System vorhanden sind. In einer besonderen Ausführungsform der Erfindung wird die SMS-Funktionalität von Festnetzgeräten zu einem sogenannten "Instant Messaging System" erweitert, das über die Bereitschaft der Nutzer informiert. Damit ist auch die Kommunikation mit mehreren Personen gleichzeitig möglich.

## Patentansprüche

1. System umfassend ein Kommunikationsnetz, insbesondere ein Telefon-Festnetz, und eine Vielzahl von über das Netz verbundener stationärer Anschlüsse, wobei den Anschlüssen Endgeräte zugeordnet sind, die Nutzern die Möglichkeit zur Kommunikation geben,
**gekennzeichnet durch**
einen Dienst, der von einem an das Netz angeschlossenen Computer realisiert ist, wobei dieser Dienst registriert, sobald ein individualisierbarer Nutzer unmittelbar über ein Endgerät erreichbar ist, wobei der Dienst die Erreichbarkeit aufgrund einer Handlung des Nutzers oder automatisch registriert.

2. System nach Anspruch 1,
**dadurch gekennzeichnet, dass** ein Endgerät eine Basisstation und ein portables Kommunikationsmittel, insbesondere ein Mobiltelefon, aufweist, wobei das portable Kommunikationsmittel mit der Basisstation innerhalb eines Sendebereiches in Funkverbindung steht, wobei der Sendebereich insbesondere kleiner als 50 m ist..

3. System nach Anspruch 2,
**dadurch gekennzeichnet, dass** der Dienst die aktuelle Erreichbarkeit eines Nutzers automatisch registriert, sobald dieser mit einem betriebsbereiten portablen Kommunikationsmittel in den Sendebereich einer anderen Station kommt, wobei zu einer Anmeldung zwischen der "fremden" Station und dem portablen Kommunikationsmittel ein Datenaustausch stattfindet.

4. System nach Anspruch 3,
**dadurch gekennzeichnet , dass** der Dienst automatisch eine Anrufweiterschaltung zum Anschluss der fremden Station durchführt.

5. System nach Anspruch 4,
**dadurch gekennzeichnet , dass** der Dienst bei Weiterleitung zum Anschluss der fremden Station, der Kennung des Anschlusses eine individuelle Gerätekennung für das portable Kommunikationsmittel anhängt.

6. System nach einem der vorherigen Ansprüche,
**dadurch gekennzeichnet, dass** der Dienst eine Datei der aktuell erreichbaren Nutzer erstellt und Informationen aus der Datei den Nutzern zur Einsicht zur Verfügung stellt.

7. System nach einem der vorherigen Ansprüche,
**dadurch gekennzeichnet , dass** der Dienst ein im Endgerät des Nutzers hinterlegtes Verzeichnis anderer Nutzer (Telephonbuch) um die Information der jeweiligen aktuellen Erreichbarkeit ergänzt.

8. System nach Anspruch 7,
**dadurch gekennzeichnet , dass** der Dienst das Verzeichnis um die Information ergänzt, inwieweit die Leitung zu dem jeweiligen Nutzer momentan frei ist.

9. System nach einem der vorherigen Ansprüche,
**dadurch gekennzeichnet , dass** der Dienst die Information betreffend die Erreichbarkeit eines Nutzers erst veröffentlicht, nachdem der Nutzer einen individuellen Code über ein Endgerät eingegeben hat.

10. Verfahren zum Betrieb eines Systems nach einem der vorherigen Ansprüche,
